# EUROPEAN PATENT APPLICATION

(11) **EP 1 477 278 A2**
(43) Date of publication of application: **17.11.2004**
(21) Application number: 04251030.5
(22) Date of filing: 25.02.2004
(51) Int. Cl.: B25B 23/142

(54) **A Clutch Mechanism for a Torque Screwdriver**

(30) Priority: 10.05.2003 GB 0310796
(71) Applicant: MHH ENGINEERING CO LTD, Guildford Surrey GU5 0AJ (GB)
(72) Inventor: Bullen, Terence Clifford 2 Southview Cottages,, Nr. Guildford, Surrey GU5 OUP (GB)
(74) Representative: Pattullo, Norman

(57) **Abstract**

A clutch mechanism and torque screwdriver including such a mechanism the clutch mechanism comprising an outer clutch ring, an inner clutch ring and at least one clutch ball interposed between the two clutch rings. The clutch ball engages a profiled indentation in one of the clutch rings and is driven by the other of the clutch rings so that the torque can be transmitted from one of the clutch rings to the other. The profile of the indentation is such that the torque transmitted is limited to a preset level in one direction of torque transmission and is above that level in the opposite direction of torque transmission.

## Description

The present invention relates to improvements in torque applying tools, specifically but not exclusively, torque screwdrivers.

Torque screwdrivers and torque applying tools such as torque wrenches work on the principle of preventing a user exerting a torque on a mechanical fastener beyond a predetermined level. Although many tools such as ordinary spanners, screwdrivers, etc., allow torque to be exerted on mechanical fasteners, it will be understood that the use of the adjective "torque" when applied to tools refers to those tools which "break" or slip upon reaching a predetermined torque value.

A clutch mechanism is usually provided between the handle of the torque screwdriver and the shaft. The clutch mechanism is usually controlled by a coil spring or other biasing means. When the torque applied by the tool reaches a pre-set level, the biasing force of the spring is overcome and the clutch mechanism slips. Thus the maximum torque that can be applied to a fastener is limited by the setting of the clutch mechanism.

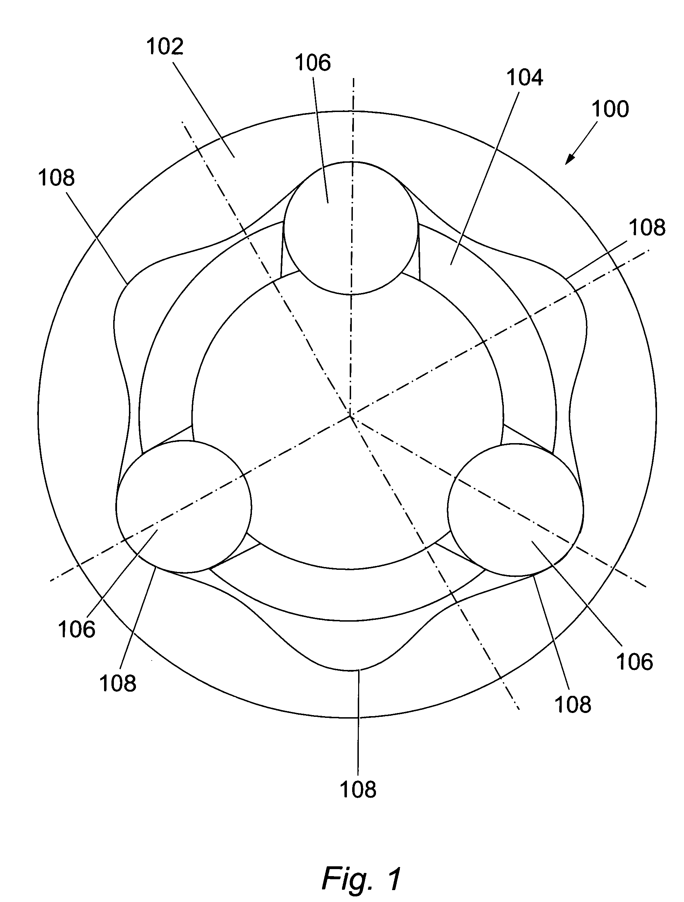

In prior art torque screwdrivers the clutch mechanism is often a ball and cam ring arrangement. Fig. 1 shows a prior art ball and cam ring arrangement 100 comprising an outer clutch ring 102, an inner clutch ring 104 and three clutch balls 106 urged radially outwards by biasing means. As is known in the art, the biasing means can be in the form of a torque limiting ball of much larger diameter than the clutch balls and which is urged against the clutch balls by, for example, a coil spring. The action of the torque-limiting ball against the clutch balls 106 serves to urge the clutch balls 106 radially outwardly against cammed indentations 108 on the inner surface of the outer clutch ring 102. The outer clutch ring 102 is coupled to a handle of a tool and the inner clutch ring 104 is coupled to a screw engaging shaft of the tool. The clutch balls 106 are urged radially outwardly and couple the outer clutch ring 102 to the inner clutch ring 104, and therefore the handle to the screw engaging shaft. In this position the clutch balls 106 act upon the profiled surface of the cammed indentations 108 of the inner face of the outer clutch ring 102.

As the operator drives a screw into a substrate, the resistance torque increases and this resistance torque translates to a force exerted on the clutch balls 106 by the outer clutch ring 102 through the cammed indentations 108. The radial component of this force on the clutch balls 106 eventually reaches a level where the force provided by the biasing means is overcome and the clutch balls 106 are moved radially inwardly out of contact with the cammed indentations 108. The outer clutch ring 102 and inner clutch ring 104 become uncoupled, and the handle of the torque screwdriver slips with respect to the screw engaging shaft.

It will be appreciated that because of the symmetrical profile of the cammed indentations 108, this slipping is bi-directional, i.e. clockwise or counter-clockwise rotation of the torque screwdriver which exceeds a certain load will result in slipping. The user may want the torque screwdriver to slip in only one direction, i.e. when driving a fastener into a substrate but not when unscrewing the fastener.

According to the present invention there is provided a clutch mechanism comprising an outer clutch ring, an inner clutch ring and at least one clutch ball interposed between the inner clutch ring and outer clutch ring, said at least one clutch ball engaging a profiled indentation in one of said clutch rings and being driven by the other of said clutch rings, whereby torque can be transmitted from one of said clutch rings to the other of said clutch rings, wherein the profile of said indentation is such that the torque transmitted is limited to a pre-set level in one direction of torque transmission and is above said level in the opposite direction of torque transmission.

Further according to the present invention there is provided a torque screwdriver including a clutch mechanism as set out in the last preceding paragraph.

Embodiments of the invention will now be described, by way of example only, with reference to the accompanying drawings in which;
Fig.1 is an end elevation of a prior art clutch arrangement;
Fig.2 is a sectional view of a clutch mechanism according to the present invention; and
Fig.3 is an elevational view in section of a torque screwdriver including the clutch mechanism of the present invention.

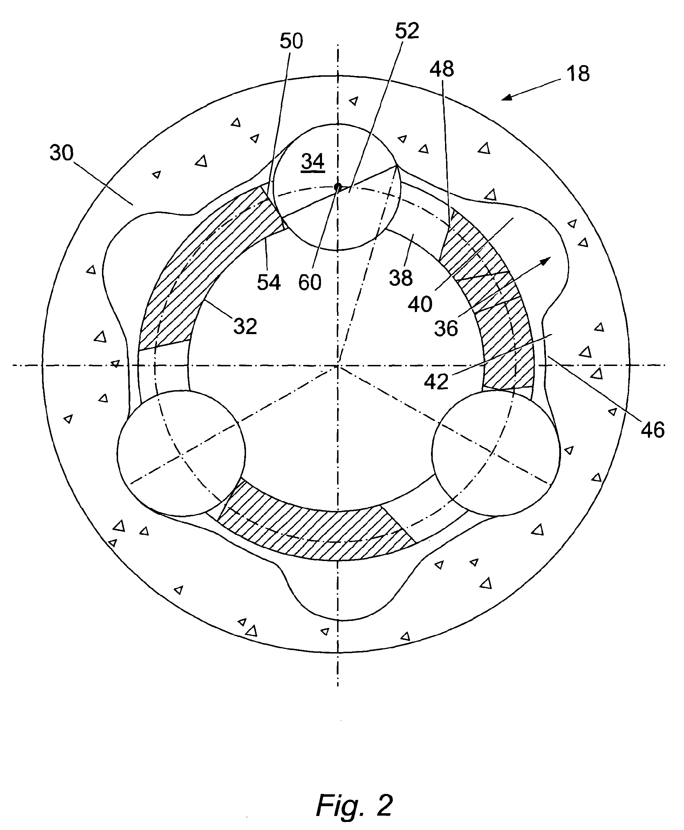

Referring now to Fig. 2 of the accompanying drawings, there is shown a clutch mechanism 18 made in accordance with the present invention. The clutch mechanism 18 comprises an outer clutch ring 30, an inner clutch ring 32 and three clutch balls 34. The outer clutch ring 30 is provided with six cammed indentations 36 equidistantly spaced around the inner surface of the outer clutch ring 30. The inner clutch ring has three clutch ball slots 38. Each ball slot 38 has a torque-limit face 48 and an opposed lock face 50. The three clutch balls 34 are acted upon by torque-limiting biasing means (not shown) which acts to urge the balls 34 radially outwardly through clutch ball slots 38 formed in the inner clutch ring 32 into contact with the cammed indentations 36.

When viewed in section, the cammed indentations 34 are asymmetrical, having a torque limit profile 40 counter-clockwise of the centre of the cammed indentations 36 and a lock profile 42 clockwise of the centre of the cammed indentations 36. The torque-limit profile 40 of the cammed indentations 36 is profiled to an extent similar to that used in previously proposed designs as is known in the art. The lock profile 42, however, has a profile which closely follows the outer surface of the clutch ball 34 terminating at a lock shoulder 46 on the inner surface 44 of the outer clutch ring 30.

The clutch ball slots 38 are also asymmetrical. The torque-limit face 48, which urges the clutch ball 34 against the torque-limit profile 40 of the cammed indentation 36, is similar in general form to prior art slots. Thus, the torque-limit face 48 is generally parallel to a line drawn from the centre of the clutch mechanism 18 to the centre of the clutch ball 34 when the torque-limit face 48 abuts said clutch ball 34. This allows the clutch ball 34 to move towards the centre of the clutch mechanism 18 when the resultant force from the resistance torque exceeds the radially outward force provided by the torque-limiting biasing means.

The lock face 50 of the clutch ball slot 38 is formed at an angle to the line drawn from the centre of the clutch mechanism 18 to the centre of a clutch ball 34 when the lock face 50 abuts the clutch ball 34. The angle of the face 40 is such as to urge the the clutch ball radially outwardly when the lock face 50 contacts the ball 34.

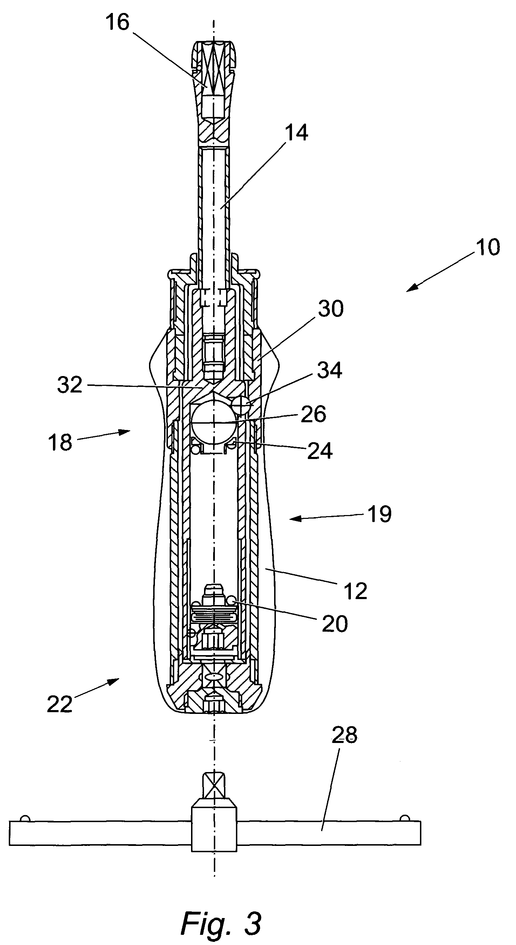

Comparing the mechanisms of Figs. 1 and 3 it will be noted that there are two significant differences, being the shapes of the slots and the cammed indentations. Whilst the prior art slots and cammed indentations are generally symmetrical about the radial centre line of the clutch balls, the slots and cammed indentations of the present invention are not.

In use, when the outer clutch ring 30 is rotated clockwise, the clutch ball 34 moves clockwise (from the position shown in Fig. 2) until the ball 34 engages the torque-limit face 48 of the respective slot 38 formed on the inner clutch ring 32 thus causing the inner clutch ring 32 to move clockwise. In this normal operation, torque applied by the user through the handle of the tool, which is connected to the outer clutch ring 30, is transmitted to a screw-engaging shaft of the tool which is connected to the inner clutch ring 32 in a known manner. When the resistance torque experienced by the shaft, and therefore the inner clutch ring 32, reaches a level determined by the setting of the torque limiting biasing means, the clutch ball 34 moves radially inwardly down the profile of the torque limit profile 40, ie towards the centre of the clutch mechanism 18, thus "disconnecting" the outer and inner rings and allowing the outer ring 30 to move relative to the inner ring 32.

When the outer ring 30 is moved counter-clockwise, the lock face 50 of the respective slot 38 urges the clutch ball 34 against the lock profile 42 of the cammed indentation 36. By virtue of the profile of the lock profile 42 and the angle of the lock face 50, the action line of this force, indicated by reference numeral 52, passes through the clutch ball 34 radially inwardly of the centre 60 of the clutch ball 34. The effect of this is to ensure that the clutch ball 34 does not move radially inwardly out of the cammed indentations 36 and thus the inner clutch ring 32 remains drivingly connected to the outer clutch ring 30. To ensure that the point of contact between the lock face 50 and the clutch ball 34 is radially inwardly of the centre 60 of the ball 34, the lock face 50 is angled as described above and, in addition, is cut away as shown at 54 to provide a point of contact of the lock face 50 which lies between the inner edge of the clutch ball slot 38 and the circumference passing through the centre 60 of the clutch ball 34.

Referring now to Fig. 3, there is shown a torque screwdriver 10 comprising a handle 12, a shaft 14 and a bit receiving socket 16. The handle 12 and shaft 14 are connected by a clutch mechanism 18 as described above with reference to Fig. 2. The torque screwdriver 10 includes in the handle 12, a torque-limiting biasing means 19 comprising a coil spring 20, a rotatable setting assembly 22, a thrust ring 24 and a torque-limiting ball 26. The torque-limiting ball 26 exerts a force upon the clutch balls 34 urging the balls 34 radially outwards. The level of the biasing force provided by the biasing means 19 determines the breaking torque of the torque screwdriver 10 and is adjusted by movement of the rotatable setting assembly 22. The position of the rotatable setting assembly 22 along the handle 12 is adjusted by a setting tool 28 which adjusts the pre-load of the coil spring 20 and thereby varies the force acting upon the torque-limiting ball 26 and thus the force urging the clutch balls 34 radially outwards.

Rotation of the handle 14, which is drivingly attached to the outer clutch ring 30 in a clockwise direction results in the torque screwdriver 10 operating as a traditional torque screwdriver, i.e. the clutch mechanism 18 will slip once a predetermined resistance torque is reached. Counter-clockwise rotation results in the torque screwdriver 10 operating as a standard screwdriver with no slippage of the clutch mechanism 18.

The present invention provides a torque screwdriver that only limits the maximum torque that can be applied in one direction.

It will be understood that the invention can be varied in both construction and detail without parting from the scope of the present invention.

For example, the embodiment described above relates to a clutch mechanism having three clutch balls and six cammed indentations. It will be understood that this number can be readily modified and may be, for example, three clutch balls and three cammed indentations.

## Claims

1. A clutch mechanism (18) comprising an outer clutch ring (30), an inner clutch ring (32) and at least one clutch ball (34) interposed between the inner clutch ring (32) and outer clutch ring (30), said at least one clutch ball (34) engaging a profiled indentation (36) in one of said clutch rings (30, 32) and being driven by the other of said clutch rings (30, 32) whereby torque can be transmitted from one of said clutch rings (30, 32) to the other of said clutch rings (30, 32) wherein the profile (40, 42, 46) of said indentation (36) is such that the torque transmitted is limited to a present level in one direction of torque transmission and is above said level in the opposite direction of torque transmission.

2. A torque screwdriver (10) including a clutch mechanism (18) as claimed in Claim 1.
